# EUROPEAN PATENT SPECIFICATION

(11) **EP 2 277 372 B1**
(45) Date of publication and mention of the grant of the patent: **26.09.2012**
(21) Application number: 10163688.4
(22) Date of filing: 24.05.2010
(51) Int. Cl.: A01G 27/00, A01G 29/00

(54) **Drip irrigator for potted plants**
Tropfenbewässerer für Topfpflanzen
Irrigateur au goutte-à-goutte pour plantes en pots

(30) Priority: 27.05.2009 IT MI20090932
(43) Date of publication of application: 26.01.2011
(73) Proprietor: CLABER S.P.A., 33080 Fiume Veneto (PN) (IT)
(72) Inventor: Franchini, Gaetano, 33080, Fiume Veneto (PN) (IT)
(74) Representative: Mittler, Enrico

(56) References cited:
- EP-A1- 1 269 831
- GB-A- 2 378 633
- US-A- 4 829 708
- US-A1- 2002 184 819
- US-B1- 7 240 457

## Description

The present invention relates to a drip irrigator for potted plants.

The need to ensure the necessary amount of daily water to plants contained in pots during the owner's absence, particularly in summer, is known.

For this purpose, water distribution devices are known, which comprise a water tank and a plurality of connecting tubes, which bring the water from the tank to several pots, where they deliver it one drop at a time. One of these devices is described in EP-A-1269831 and GB-A-2378633.

These devices are problematic if there is a high number of pots arranged at a given distance from one another, whereby the water tank may be insufficient and the tubes may not be capable of reaching all the pots intended to be irrigated.

Therefore, there is a need for providing irrigators for single pots which allow to ensure due amount of daily water to a pot arranged anywhere without needing to resort to a particularly large water tank which is difficult to be placed.

It is the object of the present invention to provide a drip irrigator for single pots which is particularly simple and functional at the same time.

In accordance with the invention, such an object is achieved by means of a drip irrigator for potted plants, **characterized in that** it comprises a support base with at least three feet insertable in the ground, a vertically extending body extending downwards from said base between said at least three feet, an irrigation water containing chamber made inside said vertically extending body and provided with an upper wall crossed by a filling orifice and provided with a lower water outlet opening, means for removably superimposing and fixing a water container on said chamber, a float accommodated in said chamber and provided at the top with a shutter pin engageable with said orifice and disengageable therefrom according to the level of water in said chamber, a dripping device removably inserted into said opening to allow the water to drip one drop at a time, and a substantially ogive-shaped delivery plug removably fixed at the lower end of said vertically extending body and provided with a terminal trap for collecting water falling from the dripping device and small lateral holes for transferring the water collected in said trap.

With the irrigator according to the invention which may be fed using any water container, such as for example a common bottle turned upside-down, the due amount of daily water may be ensured to a single pot, which is delivered one drop at a time under a pressure which is kept constant, regardless of the amount of water in the container. The float inside the water containing chamber indeed determines the opening of the orifice interposed between the water container and the chamber underneath, and the consequent filling of the chamber, when the water level in the chamber itself tends to decrease due to the water delivery and the orifice closing, with the consequent filling shutdown when the level returns to the level required.

The number of drops may be further adjusted in the unit of time, by using dripping devices of different capacity in the outlet opening of the water containing chamber.

Furthermore, the soil in which the three feet and possibly the lower part of the delivery plug are inserted, will positively not obstruct te dripping action because the lower end of the dripping device is accommodated within the ogive-shaped plug and spaced apart from the drop collection trap of the plug itself, whereby it may be reached by the surrounding soil.

These and other features of the present invention will be apparent from the following detailed description of a practical embodiment thereof shown by way of non-limitative example in the accompanying drawings, in which:
figure 1 shows a perspective view of the irrigator according to the present invention;
figure 2 shows an axial section of the aforesaid irrigator;
figure 3 shows an enlarged axial section of the same irrigator without water;
figure 4 shows the same axial section with the irrigator being filled with water;
figures 5-8 show respective examples of dripping devices of different capacity which may be alternatively used in the irrigator according to the invention.

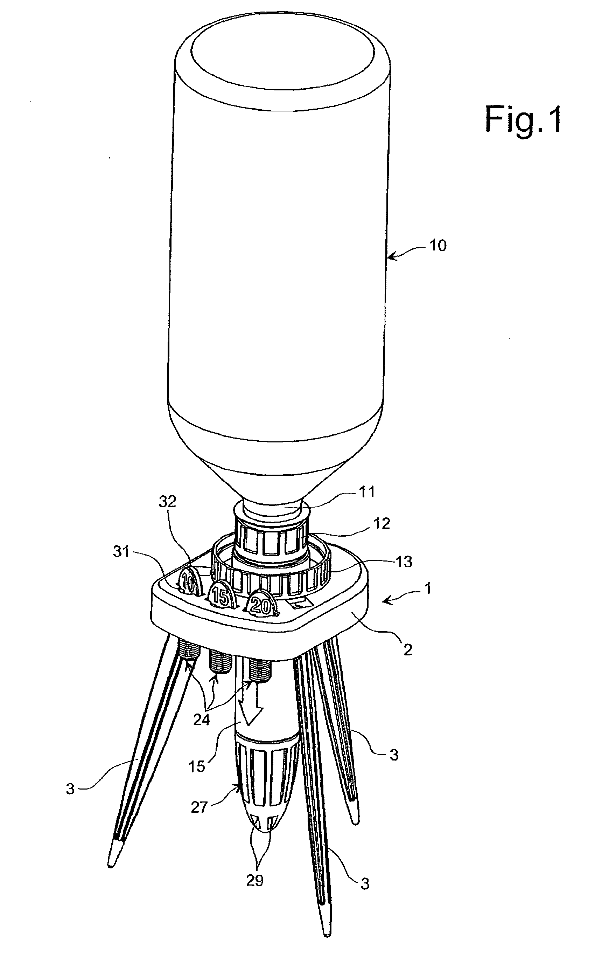

The irrigator shown in figures 1-4 comprises a support base 1 formed by a plate 2 and three feet 3, which may be either spread or gathered by means of hinges 4, which may be inserted into the soil of the pot to which the irrigator is intended.

Plate 2 has an upper central tang 5 and a lower central tang 6, both provided with internal cavities, indicated by numerals 7 and 8, respectively.

The inner cavity 7 of the upper tang 5 is split in two parts by a perforated wall 9, on which a water container 10 may rest, e.g. a normal bottle with an externally threaded neck 11, which is screwed onto a corresponding upper, internally threaded end 12 of tang 5. A further internally threaded coaxial tang 13 is provided about tang 5, which may be used to possibly fix a water container with a wider neck.

The lower tang 6 is provided with an external threading 14, on which a vertically extending body 15 is screwed, which extends downwards and defines an irrigation water containing chamber 16 therein, which communicates with the inner cavity 8 of tang 6.

A cylindrical floating body 17 is vertically and slidingly accommodated in chamber 16, the float being closed at the top by a lid 18 on which a shutter pin 19 is superimposed, which may be engaged with an orifice 20 of a separating wall 21 of cavity 8 and may be disengaged therefrom to close and open the communication between chamber 16 and container 10, respectively.

Chamber 16 is provided at the bottom with an outlet 22 for the water contained in the chamber itself, in which an externally threaded tang 23 of a dripping device 24 is press-fitted, which tang has the task of allowing the water to drip out from the chamber 16 leaking along the threading of tang 23 and to drip one drop at a time from the lower rounded end of an end head 25 of the dripping device 24.

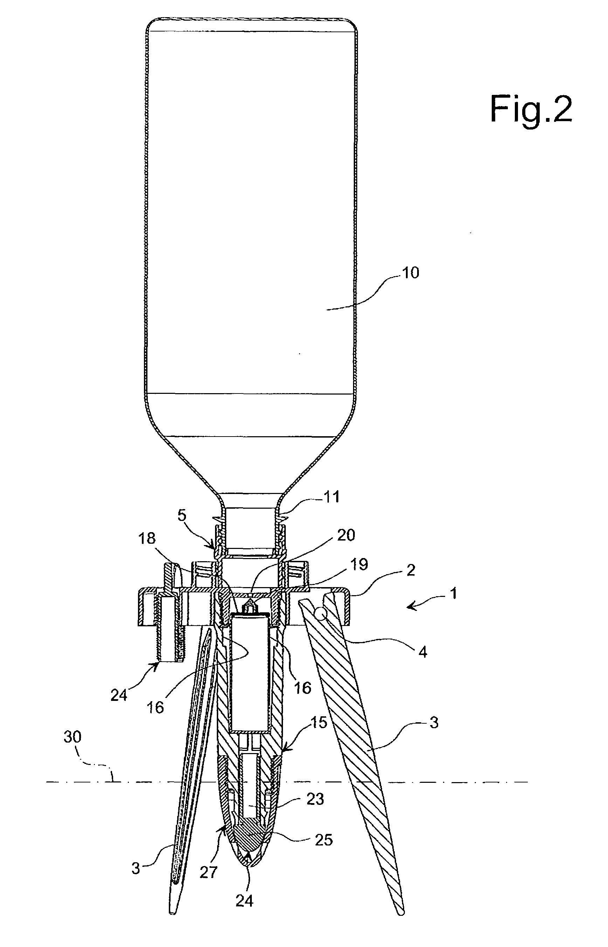

The vertically extending body 15 has a lower end 26 provided with an external threading on which a substantially ogive-shaped delivery plug 27 is screwed, which has a central end trap 28 for collecting the drops of water which drip from the head 25 of the dripping device 24 and a plurality of circumferentially spaced side holes 29, through which the water collected in the trap 28 spills into the surrounding soil (diagrammatically indicated by numeral 30 in figure 2).

The irrigator shown in figures 1-4 works as follows.

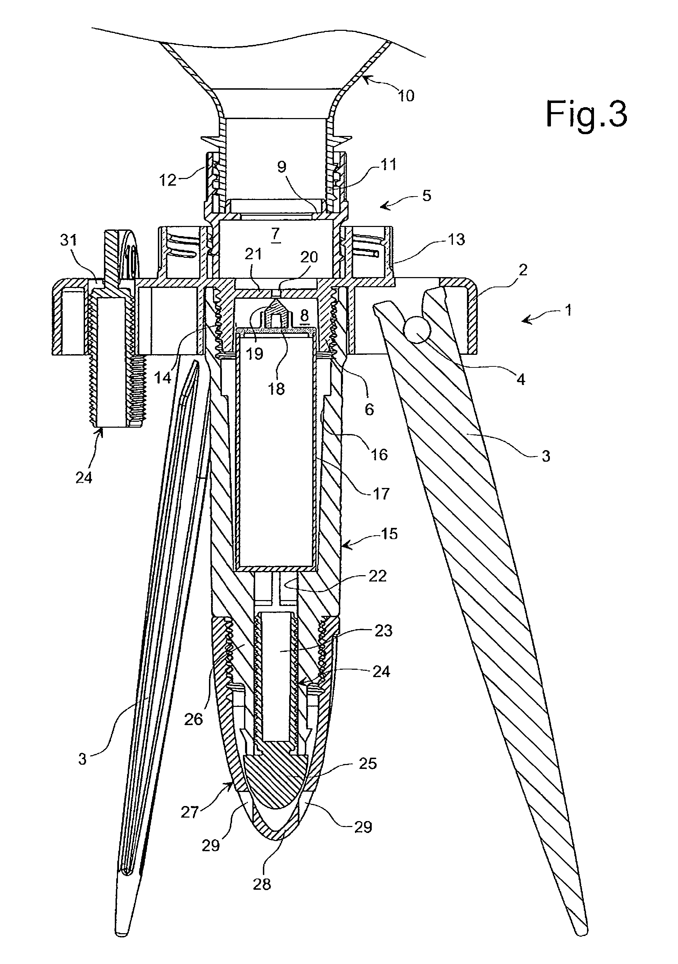

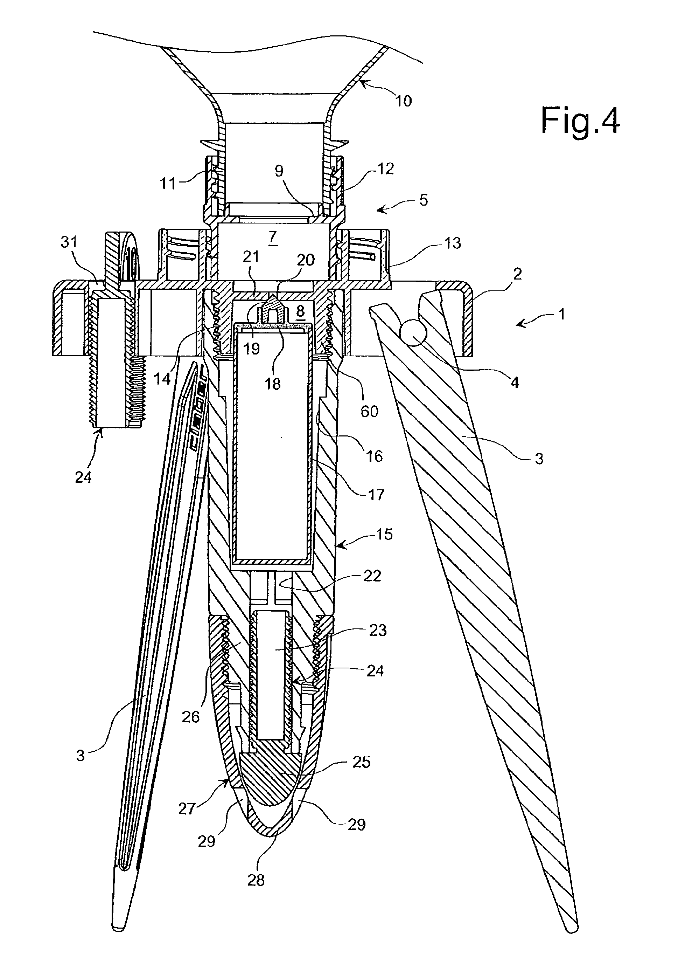

With chamber 16 being empty (figure 3), the water descends from the container 10 applied in an upside-down position onto base 1 into the containing chamber 16, thus filling it and determining the lifting of the float 17 until the closing engagement of the shutter pin 19 in the orifice 20 (figure 4). Thereby, the communication between chamber 16 and container 10 is interrupted and a pressure which is substantially, constantly independent on the amount of water in the container 10, is established within chamber 16.

The water contained in chamber 16 gradually descends along the tang 23 of the dripping device 24 and to the head 25 of the latter, from which it drips one drop at a time into the central trap 28 of the delivery body 27 to finally exit through the small holes 29.

This determines a reduction of the water pressure in chamber 16, which is immediately compensated for by the re-descent of float 17 and by the consequent reopening of orifice 20, which allows the water in container 10 to restore the previous level in chamber 16. The water pressure in chamber 16 thus remains substantially constant and so does the flow rate of water leaking along the dripping device 24.

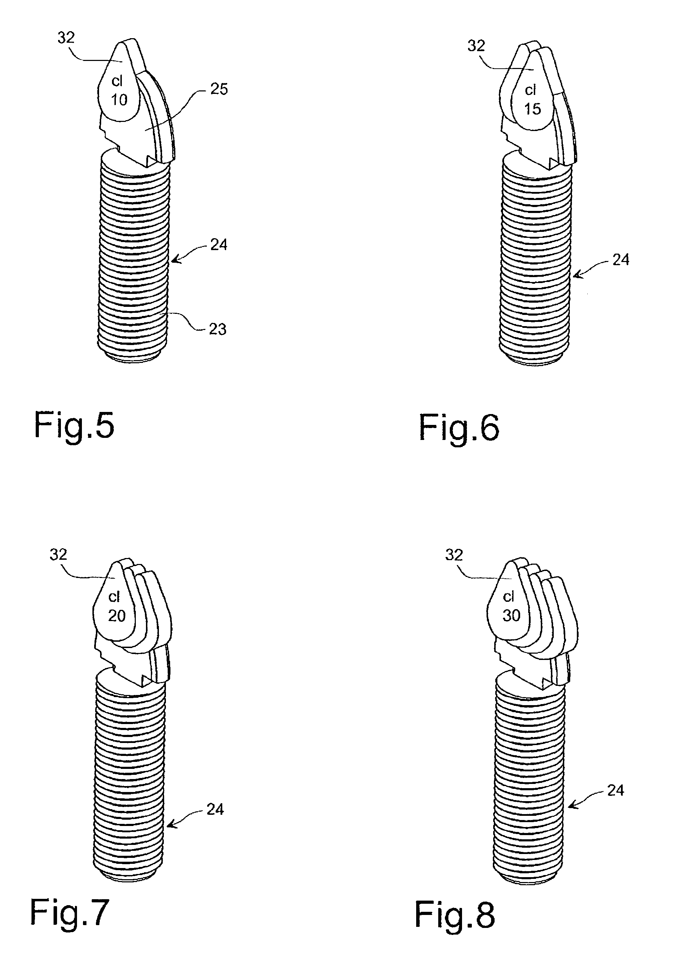

The water flow rate and thus the number of drops delivered in the unit of time may be varied by replacing the dripping device 24 with another provided with different leaking capacity. Figures 5-8 show different examples of dripping devices which may be identified by means of U-bolts 32 removably press-fitted on the head of the single devices 25.

To allow ready availability, the dripping devices which are not used are associated with the base 1 of the irrigator by inserting the tangs 23 thereof into respective holes 31 of base 1, as shown in figures 1-4.

## Claims

1. A drip irrigator for potted plants, comprising a support base (1) with at least three feet (3) insertable in the ground, a vertically extending body (15) extending downwards from said base (1) between said at least three feet (3), **characterized in that**, an irrigation water containing chamber (16) made inside said vertically extending body (15) and provided with an upper wall (21) crossed by a filling orifice (20) and with a lower water outlet opening (22), means (9, 12, 13) for removably superimposing and fixing a water container (10) on said chamber (16), a float (17) accommodated in said chamber (16) and provided at the top with a shutter pin (19) engageable with said orifice (20) and disengageable therefrom according to the level of water in said chamber (16), a dripping device (24) removably inserted into said opening (22) to allow the water to drip one drop at a time, and a substantially ogive-shaped delivery plug (27) removably fixed at the lower end (26) of said vertically extending body (15) and provided with a terminal trap (28) for collecting water falling from the dripping device (24) and small lateral holes (29) for transferring the water collected in said trap (28).

2. An irrigator according to claim 1, **characterized in that** said dripping device (24) comprises an externally threaded tang (23) press-fitted in said outlet (22) of the chamber (16) to allow water to drip out about said tang (23) and a lower head (25) with a rounded tip to allow the water collected in said trap (28) of the delivery device (27) to drip one drop at a time.

3. An irrigator according to claim 1, **characterized in that** said base (1) comprises a plate (2), on which said feet (3) are hinged and from which an upper tang (5) centrally extends, being provided with said means (9, 12, 13) for superimposing and fixing a water container (10), and from which a lower tang (6) centrally extends, to which said vertically extending body (15) may be removably fixed.

4. An irrigator according to claim 3, **characterized in that** said plate (2) is provided with seats (31) for accommodating dripping devices (24) usable to replace the one inserted into said outlet (22) of said chamber (16).

## Patentansprüche

1. Tröpfchen-Bewässerungsvorrichtung für Topfpflanzen, umfassend eine Trägerbasis (1) mit zumindest drei Füßen (3), die in den Grund einbringbar sind, einen sich vertikal erstreckenden Körper (15), der von der Basis (1) zwischen den zumindest drei Füßen (3) nach unten ragt, **dadurch gekennzeichnet, dass** eine Gießwasser enthaltende Kammer (16), die innerhalb des sich vertikal erstreckenden Körpers (15) vorgesehen ist und mit einer oberen Wand (21) samt einer Füllöffnung (20) versehen ist, und mit einer unteren Wasserauslassöffnung (22) mit Mitteln (9, 12, 13) um einen Wasserbehälter abnehmbar auf der Kammer (16) aufsetzen und fixieren zu können, mit einem Schwimmer (17), der in der Kammer (16) vorgesehen ist und der an seinem oberen Ende mit einem Verschlusszapfen (19) versehen ist, der in Abhängigkeit vom Wasserstand in der Kammer (16) in die Öffnung (20) einbringbar und daraus ausbringbar ist, mit einer Tropfvorrichtung (24), die abnehmbar in die Öffnung (22) einsetzbar ist, um Wasser Tropfen für Tropfen abgeben zu können und mit einem im Wesentlichen olivenförmigen Abgabestopfen (27), der abnehmbar am unteren Ende (26) des sich vertikal erstreckenden Körpers (15) befestigt ist, und der mit einer Endfalle (28), um Wasser, das von der Tropfvorrichtung (24) fällt, zu sammeln, und mit kleinen Querlöcher (29), um das in der Falle (28) gesammelte Wasser weiterzuleiten, versehen ist.

2. Bewässerungsvorrichtung nach Anspruch 1, **dadurch gekennzeichnet, dass** die Tropfvorrichtung (24) einen Dorn (23) mit Außengewinde umfasst, der in den Auslass (22) der Kammer (16) mittels Presssitz eingebracht ist, um es Wasser zu erlauben, um den Dorn (23) und einen unteren Kopf (25) mit abgerundeter Spitze zu rinnen, um das Wasser, das in der Falle (28) der Abgabevorrichtung (27) gesammelt ist, Tropfen für Tropfen abzugeben.

3. Bewässerungsvorrichtung nach Anspruch 1, **dadurch gekennzeichnet, dass** die Basis (1) eine Platte (2) aufweist, auf der die Füße (3) angelenkt sind und von der ein oberer Dorn (5) sich zentral erstreckt, der mit den Mitteln (9, 12, 13) für das Aufsetzen und Fixieren eines Wasserbehälters (10) versehen ist, und von dem ein unterer Dorn (6) sich zentral erstreckt, an den der sich vertikal erstreckende Körper (15) abnehmbar fixiert werden kann.

4. Bewässerungsvorrichtung nach Anspruch 3, **dadurch gekennzeichnet, dass** die Platte (2) mit Sitzen (31) versehen ist, um Tropfvorrichtungen (24) aufzunehmen, die die ersetzen können, die im Auslass (22) der Kammer (16) eingebracht ist.

## Revendications

1. Irrigateur goutte à goutte pour plantes en pot comprenant une base de soutien (1) avec au moins trois pieds (3) qu'on peut enterrer dans le sol, un corps extensible à la verticale (15) s'étendant vers le bas depuis ladite base (1) entre lesdits au moins trois pieds (3), **caractérisé par** une chambre contenant de l'eau d'irrigation (16) confectionnée à l'intérieur dudit corps d'extension verticale (15) et munie d'une paroi supérieure (21) traversée d'un orifice de remplissage (20) et d'une ouverture inférieure de sortie de l'eau (22), des moyens (9, 12, 13) pour placer dessus de manière escamotable et le fixer, un conteneur d'eau (10) sur ladite chambre (16), un flotteur (17) logé dans ladite chambre (16) et muni au sommet d'un axe d'obturation (19) qui peut être mis en prise avec ledit orifice (20) et qui peut s'en dégager en fonction du niveau de l'eau dans ladite chambre (16), un dispositif goutte à goutte (24) inséré de manière escamotable dans ladite ouverture (22) pour permettre à l'eau de goutter une goutte à la fois et un bouchon (27) débiteur de forme essentiellement ogivale fixé de manière escamotable sur l'extrémité inférieure (26) dudit corps d'extension verticale (15) et muni d'un piège terminal (28) pour recueillir l'eau tombant du dispositif goutte à goutte (24) et de petits trous latéraux (29) pour transférer l'eau recueillie dans ledit piège (28).

2. Irrigateur selon la revendication 1, **caractérisé en ce que** ledit dispositif goutte à goutte (24) comprend une soie (23) filetée à l'extérieur ajustée à pression dans ladite sortie (22) de la chambre (16) pour permettre à l'eau de goutter autour de ladite soie (23) et une tête inférieure (25) avec un bout arrondi pour permettre à l'eau recueillie dans ledit piège (28) du dispositif débiteur (27) de goutter une goutte à la fois.

3. Irrigateur selon la revendication 1, **caractérisé en ce que** ladite base (1) comprend une plaque (2) sur laquelle lesdits pieds (3) sont articulés et de laquelle une soie supérieure (5) s'étend de manière centrale, étant munie desdits moyens (9, 12, 13) pour placer dessus et le fixer, un conteneur d'eau (10) et de laquelle une soie inférieure (6) s'étend centralement, à laquelle ledit corps d'extension verticale (15) peut être fixé de manière escamotable.

4. Irrigateur selon la revendication 3, **caractérisé en ce que** ladite plaque (2) est munie d'assises (31) pour loger les dispositifs goutte à goutte (24) qu'on utilisera pour remplacer celui inséré dans ladite sortie (22) de ladite chambre (16).
